# EUROPEAN PATENT APPLICATION

(11) **EP 1 785 810 A1**
(43) Date of publication of application: **16.05.2007**
(21) Application number: 05292415.6
(22) Date of filing: 14.11.2005
(51) Int. Cl.: G06F 1/32

(54) **Idle mode for power mangagement**

(71) Applicant: Texas Instruments Incorporated, Dallas, Texas 75265 (US); TEXAS INSTRUMENTS FRANCE, 06271 Villeneuve Loubet Cedex, Nice (FR)
(72) Inventor: Dubost, Gilles, 06560 Valbonne (FR); Dahan, Franck, 06200 Nice (FR); Seigneret, Franck, Saint Jeannet, 06640 Alpes Martimes (FR)
(74) Representative: Holt, Michael

(57) **Abstract**

An apparatus and method for controlling idle mode in an electronic device. In idle mode, power and clock signals are reduced or stopped to conserve power. The apparatus includes a target module (540) coupled to a power and clock control module (PCCM) (100). The PCCM sends an idlereq signal to the target module when at least one initiator module within the device is in a power saving mode. When the target module satisfies conditions for idle mode, the target module sends an idleack signal to the PCCM and enters idle mode. In this state, the target module may process information but may not interact with other modules. When the target module detects a wakeup event, a wakeup signal is sent to the PCCM. When the PCCM returns the normal power and clock signal to the target module, the target module may resume normal operation.

## Description

The present invention generally relates to power management in an electronic device. More particularly, the invention relates to an idle mode for power management during operation of the electronic device through the control of power and clock signals.

### BACKGROUND OF THE INVENTION

Reducing power consumption in electronic devices is desirable for many reasons. Reducing consumption of power lowers the heat generated by the device, thereby increasing the reliability and decreasing the operating cost of the device. In addition, reducing the consumption of power allows battery-powered portable electronic devices, such as cellular telephones, portable music players, laptop computers, and portable gaming devices, to operate for long periods without charging the batteries.

Various techniques have been devised for reducing power consumption of electronic devices. These techniques include making the chip smaller in size using Ultra Large Scale Integration (ULSI) or Very Large Scale Integration (VLSI) techniques. Power management units may also be used to reduce the power consumption. One power reduction technique includes the capability of stopping clock signals that drive circuits which are inactive in the chip for a period of time. A device employing such a technique includes a power management unit (PMU) that detects or predicts inactive circuits and accordingly stops clock signals associated with the inactive circuits. By turning off clock signals that drive inactive circuits, the power consumption of the electronic device decreases. Additionally, removing power from inactive circuits may reduce leakage currents within the circuits. Other techniques include reducing the frequency of clock signals that drive circuits during modes of operation that are not time critical and removing power from inactive circuits.

Systems to manage power that use the abovementioned power reduction techniques monitor activities within the electronic device. For example, the PMU may couple directly through control lines to a microprocessor and peripheral devices. The control lines permit the PMU to determine the activities that occur in the microprocessor and peripheral devices. Depending on what activities the PMU detects, the PMU may responsively power down circuits, reduce the clock signal frequencies, or stop selected clock signals.

As described above, power management may reduce power consumption in an electronic device, decrease heat generation, increase reliability, and decrease cost. However, current power management techniques are difficult to design and verify that the techniques are operating properly and may lead to unpredictable and unstable operation of the electronic device. A power management system and method that is simple to design and verify and ensures reliable and predictable operation of the electronic device would be beneficial.

### SUMMARY OF THE INVENTION

The problems noted above are solved by a system and method for an idle mode in an electronic device. A control module, which may be a power and clock control module (PCCM), couples to at least one target module. A target module may be a memory controller, display device, peripheral device, universal asynchronous receiver/transmitter (UART), interface device, or any device capable of executing read and write requests transmitted from a component of the electronic device. The control module may be capable of controlling power and at least one clock signal to the target module. The at least one clock signal may synchronize communication between the target module and one or more other modules.

The target module may enter idle mode when at least one component of the electronic device enters a power saving state. When the component of the electronic device enters the power saving state, the control module may activate a first signal to the target module. The target module may enter idle mode when conditions are met. When these conditions are met, the target module transmits a second signal to the control module and enters idle mode. For example, the target module may enter idle mode if the first signal is received and the target module does not need to communicate with any other modules in the device other than the control module.

In idle mode, the functionality of the target module is limited. For example, the control module may reduce power consumed by the target module during idle mode. The control module may control at least one clock signal to the target module and may reduce the clock frequency of the clock signal or stop the clock signal to the target module. In some embodiments of the invention, the target module may only communicate with the control module in idle mode.

In idle mode, the target module is allowed to communicate with the control module, but communication with modules other than the control module may be limited. In some embodiments of the invention, the target module may not communicate with on-chip modules other than the control module. The control module may further limit power and at least one clock signal to an interconnect module when the target module is in idle mode. The interconnect module couples between an initiator module and the target module. The interconnect module is capable of transferring information between the target module and other modules in the device, such as the initiator module. The initiator module may be capable of transmitting read and write requests to the target module.

The initiator and interconnect modules may couple to the control module, and the control module may control power and at least one clock signal to both modules. The control module may limit power or the at least one clock signal if the target module enters idle mode.

The target module may activate a third signal to the control module when an event to exit idle mode occurs. The event may comprise the target module needing to communicate with an initiator or interconnect module in the device. Once the third signal is activated and power and the at least one clock signal are returned to the target module, the control module deactivates the first signal. The target module then deactivates the third and second signals and exits idle mode. The first signal may be an idlereq signal, the second signal may be an idleack signal, and the third signal may be a wakeup signal. The first and second signals may be activated synchronously to the at least one clock signal from the control module. In some embodiments of the invention, the target module may activate and deactivate the third signal asynchronously to the at least one clock signal. The third signal may be activated or deactivated synchronously to the at least one clock signal.

In some embodiments of the invention, a memory device couples to the interconnect module and the control module. The initiator module may be a processor capable of entering a power saving state, and the target module may be a universal asynchronous receiver/transmitter (UART) coupled to a modem. The UART may enter idle mode if the processor enters a power saving state and the UART does not need to communicate with components of the device other than the modem and the control module.

In some embodiments of the invention, the target module may transmit the second signal to the control module unconditionally if the target module receives the first signal, enter a forced idle mode, and exit the forced idle mode unconditionally if the first signal is deactivated. Alternatively, the target module may be in a no idle mode in which the first signal has no effect on the target module.

In one embodiment of the invention, a target module couples to an initiator module. The target module comprises a system interface unit coupled to a processing logic unit and the initiator module. An idle interface unit (IIU) couples to the system interface unit and the processing logic unit. The IIU may determine if the target module is capable of entering and exiting idle mode, forced idle mode, or no idle mode. The target module may also contain a register. The contents of the register may indicate to the IIU if the target module is allowed to enter and exit idle mode, forced idle mode, or no idle mode. An external device may couple to the target module through an external interface unit that is coupled to the processing logic unit and the IIU. The IIU may be capable of activating the wakeup signal to the control module.

In some embodiments of the invention, the target module may also contain a plurality of clock domains. The components of the target module may be capable of communicating between the plurality of clock domains. In particular, an event generator coupled between the processing logic, external interface unit and the system interface unit may be capable of communicating information between the plurality of clock domains. Upon entering idle mode, the target module may limit the functionality of the plurality of clock domains based on the contents of the idle register. In particular, the event generator may limit the type of events the target module may generate based on the content of the idle register.

### BRIEF DESCRIPTION OF THE DRAWINGS

Figure 1, in accordance with some embodiments of the invention, shows a power and clock control module (PCCM) coupled to an initiator module, an interconnect module, and a target module;
Figure 2 shows a state diagram with the states for idle mode in accordance with some embodiments of the invention;
Figure 3 shows a timing diagram of some signals associated with the target module for activating and deactivating the clock signal during idle mode;
Figure 4 is a schematic of a target module connected to an interconnect module and PCCM in accordance with some embodiments of the invention; and
Figure 5, in accordance with some embodiments of the invention, shows a universal asynchronous receiver/transmitter (UART) target module in the system of Figure 1.

### NOTATION AND NOMENCLATURE

Certain terms are used throughout the following description and claims to refer to particular system components and configurations. As one skilled in the art will appreciate, companies may refer to a component by different names. This document does not intend to distinguish between components that differ in name but not function. In the following discussion and in the claims, the terms "including" and "comprising" are used in an openended fashion, and thus should be interpreted to mean "including, but not limited to ..." Also, the term "couple" or "couples" is intended to mean either an indirect or direct electrical connection. Thus, if a first device couples to a second device, that connection may be through a direct electrical connection or though an indirect electrical connection via other devices and connections. Furthermore, the term "information" is intended to refer to any data, instructions, or control sequences that may be communicated between components of a device. For example, if information is sent between two components, data, instructions, control sequences, or any combination thereof may be sent between the two components.

### DETAILED DESCRIPTION OF EXAMPLE EMBODIMENTS

In accordance with some embodiments of the invention, in an electronic device, a power and clock control module (PCCM) couples to an initiator module, interconnect module, and target module. An initiator module is any logic circuitry that may generate write requests or read requests. Thus, the initiator module may be a processor, graphics accelerator, display controller, audio interface, digital signal processor, microcontroller unit (MCU), direct memory access (DMA) device, video accelerator, universal serial bus (USB) device, or a peripheral device that is capable of initiating read or write requests, and so on. An interconnect module may be any logic circuitry capable of routing information from an initiator module to a target module. Examples of interconnect modules are a bus, an interconnection network, and so on. A target module is any logic circuitry that is the destination of a write request or a read request. Examples of target modules include memory devices such as a cache, register, static random access memory (SRAM) controller, dynamic random access memory (DRAM) controller, and so on. Another example of a target module is a peripheral device, such as a display device, UART, and so on.

Logic circuitry may be both an initiator module and a target module. Thus, for example, a direct memory access (DMA) controller may be an initiator module when it is generating write requests or read requests. When the DMA controller is the destination of a write request or a read request from, for example, a processor, the DMA controller may be a target module.

Initiator modules initiate read and write requests to target modules. When an initiator module enters a power saving mode and no longer initiates read and write requests to a target module, the target module may enter an idle mode to reduce the consumption of power. In some embodiments of the invention, the PCCM controls idle mode in the target module by using various signals including the idlereq, idleack, and wakeup signals.

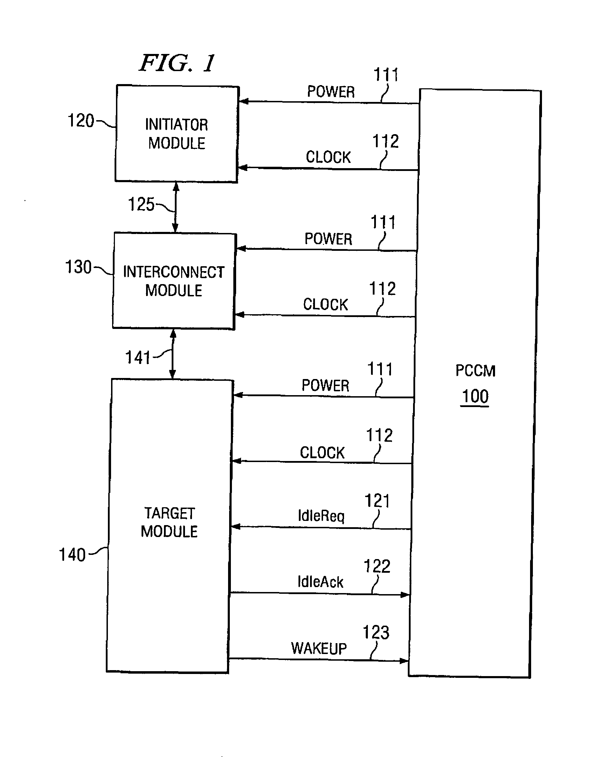

Referring to Figure 1, a PCCM 100 couples to an initiator module 120, interconnect module 130, and target module 140. PCCM 100 provides power and a clock signal to each module through power line 111 and clock line 112. Power line 111 provides power to logic circuits in each module, and clock line 112 provides a clock signal to logic circuits in each module for control and synchronization. In some embodiments of the invention, clock line 112 may provide identical clock signals to each module, derived clock signals to each module, or independent clock signals to each module from PCCM 100. In some embodiments of the invention, PCCM 100 may provide varying amounts of power to each module through power line 111.

In the electronic device shown in Figure 1, interconnect module 130 couples to both initiator module 120 and target module 140 and may be any logic circuitry capable of routing information, such as data and instructions, from initiator module 120 to target module 140. Further, interconnect module 130 may communicate events, such as interrupts or direct memory access (DMA) requests, between target module 140 and initiator module 120. An interrupt is a signal that momentarily interrupts initiator module 120 processing and indicates to initiator module 120 that a predefined event has occurred within target module 140. A DMA request is a request for information between modules. Interconnect module 130 may consist of a bus, which may be described as a set of conductors coupled between modules of the electronic device. In some embodiments of the invention, events may be communicated between target module 140 and initiator module 120 through separate connections between the modules (not shown in Figure 1).

Interconnect module 130 may be an interconnection network which is a collection of buses connected together to form a mesh with nodes at the bus intersections, the buses including logic circuitry that can route information from one module at a node to another module at another node. Further, interconnect module 130 may be any other device capable of routing information between modules.

Initiator module 120 is any logic circuitry within an electronic device that generates write or read requests. Initiator module 120 may be a processor, graphics accelerator, display controller, audio interface, digital signal processor, microcontroller unit (MCU), direct memory access (DMA) device, video accelerator, universal serial bus (USB) device, any other type of device capable of executing write or read instructions, and so on. Initiator module 120 connects to interconnect module 130 through connection 125.

Target module 140 is any logic circuitry within a device that is the destination of a write or read request in the device. Target module 140 may be a memory device, such as a register, cache, internal or external SRAM or DRAM controller, or a peripheral device, such as a display device, UART, and so on. Interconnect module 130 connects to target module 140 through connection 141.

Initiator module 120, for example, may be a processor capable of reading information from target module 140, which may be a memory device, such as dynamic random access memory (DRAM) controller. When initiator module 120 generates a request to target module 140, interconnect module 130 coordinates the request to the memory device. Interconnect module 130 then coordinates the transmission of information obtained from the memory device to the processor. In some embodiments of the invention, multiple initiator modules 120 and target modules 140 may be present and interconnect module 130 may serve to coordinate the flow of information between the modules.

Modules in an electronic device may include circuitry which are not contiguously placed next to each other but rather distributed throughout the device. Thus, the modules shown in Figure 1 may be considered a logical partitioning of the circuits on an electronic device rather than a physical partitioning. For example, consider a chip containing the circuitry for a processor and a cache. The processor circuitry may be located on different parts of the chip and contiguous to or mixed in with the cache circuitry. Circuitry for the processor may be logically grouped into an initiator module and the circuitry for the cache may be logically grouped into a target module. Similarly, the chip may contain bus circuitry that is distributed along different parts of the chip and which connects the processor circuitry and cache circuitry. The bus circuitry may be logically grouped into an interconnect module.

When initiator module 120 does not initiate read or write requests to target module 140, PCCM 100 may deactivate or limit the power and the clock signal transmitted to initiator module 120 to reduce the power consumed by the logic circuitry in initiator module 120. Thus, initiator module 120 may enter a standby mode in which it consumes less power and may not use the clock signal. Initiator module 120 may exit standby mode if a read or write request needs to be initiated to other components of the device. To exit standby mode, initiator module 120 informs PCCM 100 to activate the power and the clock signal. Standby mode referenced above is described in detail in the copending, commonly assigned patent application "Standby Mode for Power Management" by Dahan, et al., EP Application No. , filed on even date herewith.

When initiator module 120 enters standby mode, PCCM 100 may deactivate or limit the power and the clock signal transmitted to target module 140 to reduce the power consumed by the logic circuitry in target module 140. Thus, the target module may enter an idle mode in which it consumes less power and may not use the clock and power signals. Target module 120 may exit idle mode if initiator module 120 exits standby mode or target module 140 needs to send an interrupt to initiator module 120.

Target module 140 entering idle mode may cause interconnect module 130 to also enter a power saving mode if interconnect module 130 does not have information to transmit. In some embodiments of the invention, target module 140 may enter idle mode after interconnect module 130 enters the power saving mode. Placing target module 140 in idle mode and interconnect module 130 in power saving mode may reduce power consumption within the device. In some embodiments of the invention, interconnect module 130 may be capable of entering idle mode.

While the amount of power saved each time a target module 140 is in idle mode may not be significant, the cumulative effect of power saved by placing target module 140 in idle mode may be considerable. Because multiple initiator modules 120, interconnect modules 130, and target modules 140 may be present in the device, standby mode in the initiator module, idle mode in the target module, and power saving mode in the interconnect module may save significant amounts of power. Thus, electronic devices utilizing standby mode, idle mode, and power saving mode allow battery powered devices, such as laptop computers, portable music players, cellular telephones, personal digital assistants (PDA), and other portable electronic devices, to reduce power consumption and increase battery life.

In some embodiments of the invention, as described above, target module 140 may detect when initiator module 120 enters standby mode. As shown in Figure 1, PCCM 100 activates an idlereq signal to target module 140 through an idlereq line 121 when initiator module 120 enters standby mode and interconnect module 130 is not transferring information to target module 140. Target module 140 may be in an inactive state when not communicating with initiator module 120 or interconnect module 130. If target module 140 is inactive, an idleack signal is activated to PCCM 100 through an idleack line 122. Once the idleack signal is activated, target module 140 no longer transmits events to initiator module 120. Events may be interrupts, DMA requests, or other events synchronous to a commonly used clock signal in the device, such as a clock signal to interconnect module 150.

When PCCM 100 receives the idleack signal, PCCM 100 may reduce or eliminate power sent to target module 140 and turn off the clock signal transmitted to target module 140. In some embodiments of the invention, PCCM 100 may at least remove the clock signal used for target module 140 communication with interconnect module 130. In some other embodiments of the invention, PCCM 100 may reduce the frequency of the clock signal. Thus, target module 140 in these embodiments may use the clock signal while reducing power consumption.

In some embodiments of the invention, target module 140 may not communicate with any modules in the device other than PCCM 100 while in idle mode. In some embodiments of the invention, target module 140 may communicate with an external device while in idle mode. If target module 140 needs to communicate with other modules in Figure 1, target module 140 must exit idle mode before any communication may occur. If a condition occurs that causes target module 140 to wakeup from idle mode, as described below, target module 140 may activate a wakeup signal to PCCM 100 through a wakeup line 123. After PCCM 100 receives the wakeup signal, PCCM 100 returns the power and clock signals to steady state operating conditions. PCCM 100 then deactivates the idlereq signal and target module 140 deactivates the wakeup signal and idleack signal and exits idle mode. In some other embodiments of the invention, target module 140 may have limited communication with modules in the device while in idle mode.

Target module 140 may also wakeup from idle mode if initiator module 120 exits standby mode. Thus, PCCM 100 deactivates the idlereq signal and returns the power and clock signals to steady state operating conditions. Target module 140 may then receive and process requests from initiator module 120.

In accordance with some embodiments of the invention as described above, power consumption may be reduced while allowing error free operation of the electronic device. Verification and validation of the electronic device shown in Figure 1 may be performed by testing a target module to ensure the idlereq, idleack, and wakeup signals function properly. Logical partitioning of the circuitry, as described above, into modules allows simplified verification and testing. Thus, costly and time consuming testing of the device at the chip or system level for the power management system may not be necessary.

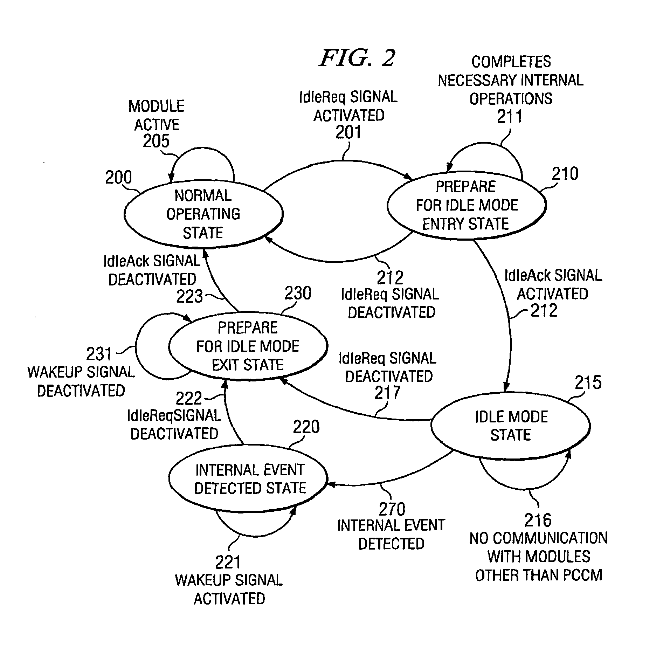

Turning now to Figure 2, a state diagram for idle mode includes the following states: normal operating state 200, prepare for idle mode entry state 210, idle mode state 215, internal event detected state 220, and prepare for idle mode exit state 230. In normal operating state 200, target module 140 is active 205 and may receive and process write and read requests from initiator module 120 and perform internal operations. When initiator module 120 enters standby mode, PCCM 100 activates 201 the idlereq signal to target module 140, thus transitioning target module 140 into prepare for idle mode entry state 210.

In prepare for idle mode entry state 210, target module 140 completes internal operations 211 necessary to enter idle mode. For example, target module 140 may finish any internal processing necessary for completion before entry into idle mode, or target module 140 may prepare for low power or altered clock operation. If PCCM 100 deactivates 212 the idlereq signal, target module 140 transitions from prepare for idle mode entry state 210 to normal operating state 200.

Once target module 140 activates the idleack signal, the target module 140 transitions from prepare for idle mode entry state 210 to idle mode state 215. In idle mode state 215, target module 140 may not communicate with modules other than PCCM 216. Thus, target module 140 may not generate events to initiator module 120 in idle mode state 215. As described above, events may be interrupts, DMA requests, or other events synchronous to a commonly used clock signal in the device, such as a clock signal to interconnect module 150.

Further, PCCM 100 may limit or remove power and a clock signal to target module 140. In some embodiments of the invention, power and the clock signal to target module 140 may remain unaltered. Thus, target module 140 may continue operating while in idle mode, which may allow other modules in the system shown in Figure 1 to enter power saving modes.

If PCCM 100 returns power and clock to steady state levels and deactivates 217 the idlereq signal when target module 140 is in idle mode state 215, target module 140 transitions to prepare for idle mode exit state 230. Target module 140 may then deactivate the idleack signal 223 and enter normal operating state 205.

If an internal event in target module 140 is detected 270 during idle mode state 215, target module 140 transitions to internal event detected state 220. An internal event in target module 140, for example, may occur if target module 140 needs to communicate with initiator module 120. In internal event detected state 220, target module 140 activates 221 the wakeup signal to PCCM 100. PCCM 100 returns power and the clock signal to steady state levels in target module 140 and deactivates 222 the idlereq signal. Target module 140 transitions from internal event detected state 220 to prepare for idle mode exit state 230. Target module 140 then deactivates the wakeup signal 231 and the idleack signal 223 and returns to normal operating state 200. In normal operating state 200, target module 140 is active and may communicate with other modules in the device and perform internal operations 205.

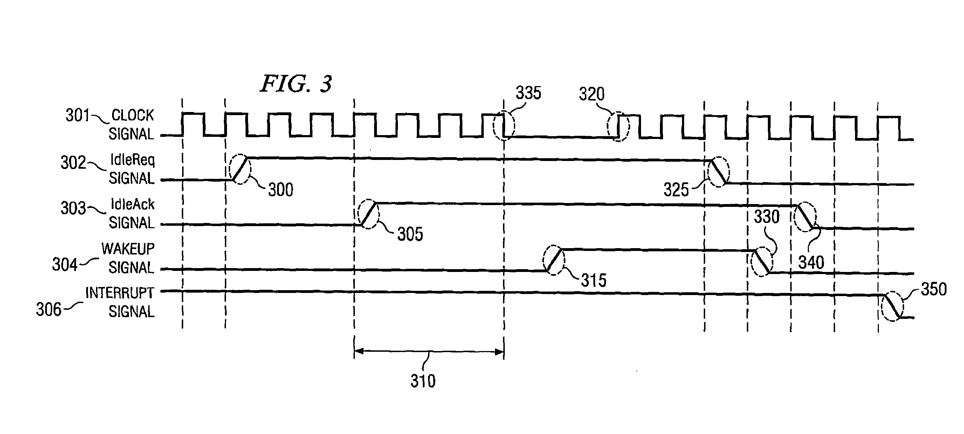

Turning now to Figure 3, a timing diagram of target module 140 shows activation and deactivation of a system clock signal during idle mode. Figure 3 shows the system clock signal 301 to the target module 140, idlereq signal 302, idleack signal 303, wakeup signal 304, and interrupt signal 306. As described above, clock signal 301 provides a synchronous timing signal to target module 140. PCCM 100 controls clock signal 301 through clock line 112 as shown in Figure 1. Interrupt signal 306 shows timing for interrupts sent from target module 140 to initiator module 120.

In some embodiments of the invention, the signals shown in Figure 3 may be activated by transitioning from low to high. Interrupt signal 306 may be activated by transitioning from high to low. In some other embodiments of the invention, the idlereq 302, idleack 303, and wakeup 304 signals shown in Figure 3 may be activated by transitioning from high to low. Further, activation and deactivation of the signals shown in Figures 1 and 3 may be represented by a combination of several signals, one signal from a group of multiplexed signals, an encoded signal, or a sequence of burst signals.

When PCCM 100 detects that initiator module 120 has entered standby mode or another power saving state and target module 140 interaction through interconnect module 130 is complete, PCCM 100 activates idlereq signal 300 to target module 140. Once target module 140 is capable of entering idle mode, target module 140 activates 305 idleack signal 303, thus allowing target module 140 to go into idle mode. After idleack signal 303 is activated 305, interrupt signal 306 may not be activated until target module 140 exits idle mode. Thus, target module 140 may not transmit an interrupt to initiator module 120 while in idle mode. After a delay 310 controlled by PCCM 100, PCCM 100 may remove 335 clock signal 301 to target module 140. Delay 310 may vary depending on the clock used by target module 140 and the modules connected to target module 140.

When target module 140 detects an internal event that necessitates target module 140 communication with initiator module 120, target module 140 activates 315 wakeup signal 304. In some embodiments of the invention, wakeup signal 304 is activated asynchronously 315 to clock signal 301 because clock signal 301 has been removed. Once target module 140 activates wakeup signal 304, PCCM 100 returns 320 system clock 301 to a steady state level and deactivates 325 idlereq signal 302. Target module 140 may then deactivate (330, 340) wakeup signal 304 and idleack signal 303 and exit idle mode. Target module 140 may resume normal functionality and communicate with initiator module 120 and perform internal processing. For example, once target module 140 exits idle mode, target module 140 may transmit an interrupt signal 350 to initiator module 120.

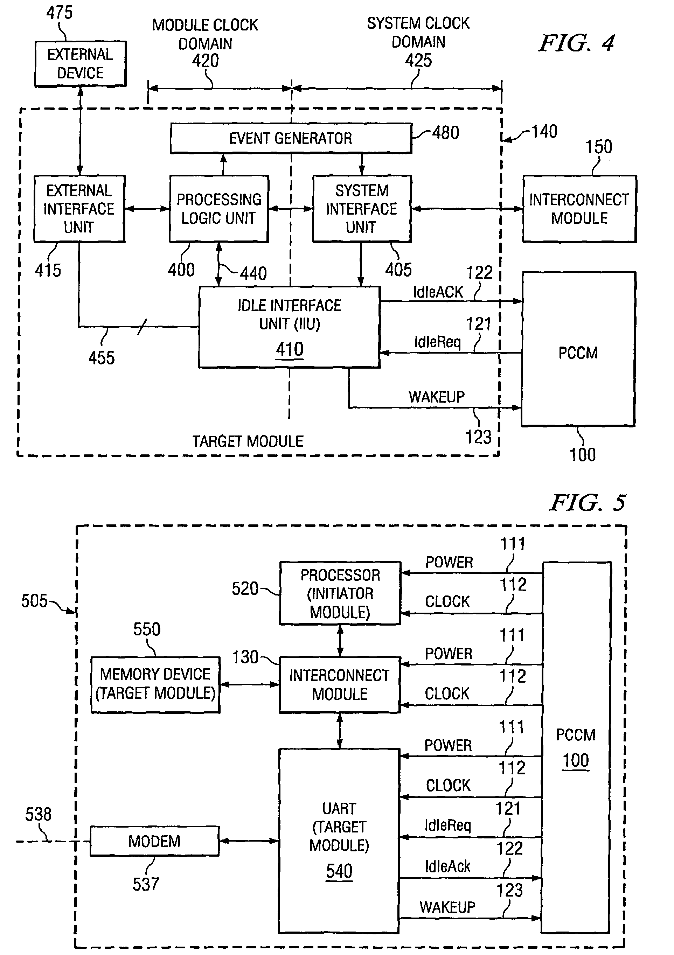

Turning now to Figure 4, target module 140 may include a processing logic unit 400 coupled to a system interface unit 405 and an idle interface unit (IIU) 410. System interface unit 405 may receive read and write requests from interconnect and initiator modules (not shown in Figure 4). System interface unit 405 may further transmit interrupts to initiator and interconnect modules. Processing logic unit 400 represents the functional logic of target module 140. For example, if target module 140 is a memory device, processing logic unit 400 may represent the storage and control components of the memory device. Processing logic unit 400 transmits information to system interface unit 405 to be sent to initiator module 120 (not shown in Figure 4).

IIU 410 couples to PCCM 100 through idleack line 122, and idlereq line 121. In some embodiments of the invention, IIU 410 determines if target module 140 should be placed into idle mode by evaluating the activity in target module 120 and idlereq line 121. If IIU 410 receives an idlereq signal from PCCM 100, IIU 410 may activate the idleack signal if target module 140 is capable of entering idle mode. Thus, IIU 410 may place target module 140 into idle mode.

IIU 410 couples to PCCM 100 through idlereq line 121 and idleack line 122. IIU 410 evaluates the activity within target module 140 and communication with other modules from target module 140. In particular, processing logic unit 400, through connection 440, indicates to IIU 410 if internal processing is taking place. If IIU 410 receives the idlereq signal from PCCM 100 and detects that all predefined conditions for idle mode have been met, IIU 410. may activate the idleack signal and target module 140 may enter idle mode.

In some embodiments of target module 140, an external interface unit 415 connects to an external device 475. External interface unit 415 connects to processing logic unit 400. In some embodiments of the invention, target module 140 may be a peripheral module such as an interface device. The interface device may be capable of interfacing with an external device 475 that may be a printer. In some embodiments of the invention, processing logic unit 400 may be capable of converting signals from an initiator module (not shown in Figure 4) into information to be transmitted to the printer. When the printer is inactive, e.g., a print job has been sent to the printer and is stored in the printer memory and the printer no longer communicates with the initiator module, target module 140 may enter idle mode. If the printer experiences an error and needs to communicate the error through the interface device to the initiator module, external interface unit 315 activates a signal through connection 455 to IIU 410. If a signal is activated to IIU 410 through line 455 and the idleack line 122 and idlereq line 121 are active, the wakeup signal activates through wakeup line 123 to PCCM 100. Target module 140 then proceeds to exit idle mode as described above once PCCM 100 returns power and the clock signal to steady state levels for normal operation.

Processing logic unit 400 may also cause target module 140 to exit from idle mode. Processing logic unit 400, through internal logic, may determine that target module 140 needs to communicate with initiator module 120. For example, target module 140 may need to transmit an interrupt through interconnect module 150 to an initiator module (not shown). Processing logic unit 400 may activate a signal to IIU 410 through connection 440. IIU 410 detects that idleack line 122 and idlereq line 121 are active and may thus activate the wakeup signal through wakeup line 123 to PCCM 100. Target module 140 may then exit idle mode as described above and shown in Figure 2 once PCCM 100 returns power and the clock signal to steady state levels.

In some embodiments of the invention, components of target module 140 may operate in separate clock domains. Separate clock domains may include multiple clock signals from different sources or one clock signal that is modified into multiple clock signals. System interface unit 405 may operate within system clock domain 425 in order to synchronously communicate with other modules of the device, such as interconnect module 150 and an initiator module (not shown in Figure 4). Processing logic unit 400 may operate within module clock domain 420. Some components of target module 140, such as processing logic unit 400, for example, may not require as fast a clock speed as is needed for communicating with interconnect module 150 or the initiator module. By using a slower clock signal in module clock domain 420, power consumption in target module 140 may be reduced. Furthermore, a clock signal in module clock domain 420 may be a specific frequency for functional purposes. For example, if target module 140 is an audio interface module, processing logic unit 400 may require a clock signal with a specific frequency for processing audio information. Thus, the clock signal in module clock domain 420 may differ from a clock signal used in system clock domain 425 for communicating with interconnect module 150 and initiator module 120 (not shown in Figure 4).

Using multiple clock domains in target module 140 enables a variety of power saving options for target module 140. For example, a clock signal used by components in system clock domain 425 may be turned off while a clock signal used by components in module clock domain 420 may be operating normally. Thus, in idle mode, processing logic unit 400 may process information when the clock signal is removed from system clock domain 425. In some other embodiments of the invention, target module 140 may contain more than two clock domains.

In some embodiments of the invention, an idle register (not shown in Figure 4) may dictate the control of module clock domain 420 and system clock domain 425. For example, the contents of the idle register may indicate to target module 140 that the clock signal to module clock domain 420 is to be removed in idle mode and the clock signal to the system clock domain 425 is to remain constant. Alternatively, the content of the idle register may indicate to target module 140 that the clock signal to module clock domain 420 is to remain constant in idle mode and the clock signal to the system clock domain 425 is to be removed, and so on. Both the clock signals to the module clock domain and the system clock domain may be removed or unaltered.

In some embodiments of the invention, the content of the idle register may be altered by a processor (not shown in Figure 4) or other module in a system according to conditions in the system. The content of the idle register may also dictate the power control in module clock domain 420 and system clock domain 425. For example, IIU 410 may vary conditions to enter idle mode based on the content of the idle register.

Communication between components in different clock domains may need interfacing circuitry. In a system containing two separate clock domains, for example, components in each clock domain may communicate at different rates. When these components in different clock domains need to communicate with each other, interfacing circuitry may be necessary to ensure that no information is lost during communication between the components in different clock domains. For example, a component in a low speed clock domain may not be able to read information from a component in a high speed clock domain.

IIU 410 and an event generator 480 are capable of operating in both module clock domain 420 and system clock domain 425. These modules ensure error free flow of information from module clock domain 420 to system clock domain 425 and vice versa. Event generator 480 couples to processing logic module 400 and system interface module 405.

As described above, when target module 140 is in idle mode and an internal operation occurs in processing logic unit 400 that necessitates target module 140 communicating with an initiator module, target module 140 may exit idle mode. For example, processing logic unit 400 may need to send an event, such as an interrupt or DMA request, to the initiator module. However, an event generated by processing logic unit 400 may not be in the same clock domain as the system interface unit 405 that sends events from target module 140 to the initiator module.

To ensure that the event is generated and the clock domain communication issue described above is avoided, the event may be generated by event generator 480. Event generator 480 is capable of communicating between module clock domain 420 and system clock domain 425. Event generator 480 sends the event to the initiator module (not shown in Figure 4) through system interface unit 405 and interconnect module 150. Without event generator 480 placed between processing logic unit 400 and system interface unit 405, interrupts and other interactions generated by processing logic unit 400 may not be communicated between the different clock domains.

Turning now to Figure 5, an interconnect module 130 couples to a universal asynchronous receiver/transmitter (UART) 540, processor 520, memory device 550, and PCCM 100. A power line 111 and a clock line 112 are coupled from PCCM 100 to each module shown in Figure 5. UART 540 couples to PCCM 100 through an idlereq line 121, idleack line 122, and wakeup line 123. Additional idlereq, idleack, and wakeup lines (not shown) couple from PCCM 100 to memory device 550. The power and clock lines connected to memory device 550 are also not shown in Figure 5. Memory device 550 and UART 540 are both target modules capable of entering idle mode, and processor 520 is an initiator module capable of entering standby mode.

UART 540 is capable of interfacing with a peripheral device such as a modem, printer, mouse, GPS receiver, Bluetooth receiver/transmitter, personal digital assistant (PDA), digital camera, or other serial device. In Figure 5, UART 540 couples to modem 537. Modem 537 is a device capable of receiving serial data transmitted from UART 540 and communicating the serial data over a telephone line or other communication medium 538 to another modem (not shown).

Processor 520 transfers words of information from memory device 550 to UART 540 for transmission to modem 537. UART 540 transmits each word of information serially, meaning one bit at a time, to modem 537. Conversely, the UART is also capable of receiving information serially and converting the bits into words of information. Modem 537 may possess the same serial conversion capability as UART 540, thus allowing serial communication between UART 540 and modem 537.

In some embodiments of the invention, UART 540 includes a buffer to hold information, such as data or instructions, to be transmitted or converted. The buffer is a memory device which may hold, for example, 16 kilobytes (Kb) of information, 32 Kb of information, or 64 Kb or greater of information. As the UART 540 transmits information to modem 537, processor 520 fills the UART's buffer with information from memory device 550. In some embodiments of the invention, once UART 540 serially transmits the information stored in the buffer, processor 520 may refill the buffer with more information to be transmitted.

In some embodiments of the device shown in Figure 5, when processor 520 is not communicating with UART 540 or memory device 550, processor 520 may enter standby mode. When processor 520 enters standby mode, PCCM 100 may activate an idlereq signal to UART 540. UART 540, which no longer communicates with any modules in system 505 other than PCCM 100 and modem 537, may activate an idleack signal to PCCM 100 through idleack line 122 and enter idle mode. In idle mode, PCCM 100 may remove power and the clock signal to the UART's system clock domain 425 (not shown in Figure 5 but shown in Figure 4) and maintain the power signal and clock signal sent to module clock domain 420 (shown in Figure 4) so that modem 537 may transfer information and UART 540 may empty or fill its buffer.

In some embodiments of idle mode, UART 536 may serially transmit information stored in the UART buffer to modem 537 for transmission across connection medium 538. Power is conserved in UART 536 because power and the clock signal are removed from system clock domain 425. Further, power and the clock signal sent to interconnect module 130 and processor 520 may be removed because no information is transferring between processor 520, memory device 550, and UART 540. In some embodiments of the invention, memory device 550 may also enter idle mode.

When UART 540 transfers all the information in the buffer or the buffer needs to be filled, UART 540 may need to send an interrupt to processor 520 indicating that more information is needed. While in idle mode, UART 540 may not communicate with modules other than PCCM 100 or modem 537, thus UART 540 needs to exit idle mode to send the interrupt. When UART 540 detects that the information buffer is empty or full, UART 540 activates the wakeup signal to PCCM 100 through wakeup line 123. PCCM 100 returns power and the clock signal for UART 540 to steady state levels.

In particular, power and the clock signal to system clock domain 425 of UART 540 are returned to steady state levels. PCCM 100 deactivates the idlereq signal. UART 540 then deactivates the wakeup signal and the idleack signal and enters normal operating mode. PCCM 100 may return power and the clock signal to interconnect module 130 to steady state levels when PCCM 100 detects that UART 540 has to exit idle mode.

UART 540 may then send an interrupt to processor 520 indicating that more information is needed to fill the UART buffer. In particular, processing logic unit 400 (see Figure 4) in UART 540 may indicate to event generator 480 to generate an interrupt synchronous with the system clock to be sent through interconnect module 130 to processor 520. When the interrupt is received by processor 520 through interconnect module 130, processor 520 may exit standby mode. Once processor 520 exits standby mode, memory device 550 may exit idle mode. Processor 520 may now read information from memory device 550 and write the information into the UART buffer. When the UART 536 buffer is full and processor 520 no longer needs to initiate any more read or write requests, processor 520 may enter standby mode. Memory device 550 and UART 540 may enter idle mode, and power and the clock signal may be removed from interconnect module 130.

In some embodiments of Figure 5, information may transfer directly from memory device 550 to the UART buffer by using a direct memory access (DMA) controller (not shown in Figure 5). A DMA controller moves information from memory device 550 to UART 540 without constantly involving processor 520. Thus, processor 520 may enter or remain in standby mode while information transfers directly from memory device 550 to UART 540, further reducing power consumption in the electronic device.

As shown in Figure 5, idle mode may be used in a device with multiple initiator modules and target modules. Idle mode may enable portable electronic devices comprising multiple initiator and target modules to reduce power consumption while allowing error free operation. Furthermore, the operation of idle mode as described above may be tested and verified at a module level instead of at the device level, thus reducing the time and complexity to test the electronic device. In some embodiments of the invention, PCCM 100 may control multiple clock signals to an individual module. For example, the PCCM may transmit two clock signals through two clock lines to the processor.

In some embodiments of the invention, a target module may also contain a forced idle mode. Forced idle mode may be used as an alternative for idle mode. If idle mode in target module 140 of the system shown in Figure 1 is not functioning properly, target module 140 may be placed into forced idle mode instead of idle mode. In forced idle mode, the target module enters idle mode upon PCCM 100 activating the idlereq signal. The target module activates the idleack signal when the idlereq signal is received and enters idle mode. The target module 140 exits forced idle mode when the idlereq signal is deactivated. Thus, PCCM 100 controls forced idle mode in target module 140 through the idlereq signal. Forced idle mode may allow power management in initiator module 120, interconnect module 130, and target module 140 if idle mode is not functioning properly at test time.

In some embodiments of the invention, target module 140 may also contain a no-idle mode. In no-idle mode, the target module may not enter idle mode. Thus, if a target module is in no-idle mode, the target module may receive an idlereq signal but may neither activate the idleack signal nor enter idle mode. No-idle mode may be used in target modules that cannot or should not enter idle mode.

In some embodiments of the invention, each target module 140 in the electronic device may have a control register associated with it. Each control register may contain a code indicating the particular idle mode for the target module. For example, the control register in the electronic device may be programmed so that the target module operates in idle mode. Alternatively the control register may be programmed so that the target module operates in forced idle mode or no-idle mode. In some embodiments of the invention, a processor or other module coupled to the target module 140 may change the idle mode of target module 140 by modifying the contents of the control register.

While the present invention has been described with respect to a limited number of example embodiments, those skilled in the art will appreciate that numerous variations, substitutions and additions may be made thereto, without departing from the scope and intended coverage of the invention.

## Claims

1. A method, comprising:
activating a first signal from a control module to a target module;
activating a second signal from the target module to the control module;
entering an idle mode in the target module; and activating a third signal from the target module to the control module when an event to exit idle mode occurs.

2. The method of claim 1, wherein the first signal is an idlereq signal, the second signal is an idleack signal, and the third signal is a wakeup signal.

3. The method of claim 1 or 2, comprising prohibiting generation of events by the target module in idle mode, wherein the events are synchronous to a clock signal, the clock signal capable of synchronizing communication between the target module and one or more other modules.

4. The method of any of claims 1 - 3, comprising limiting power and at least one clock signal to an interconnect module when the target module is in idle mode, said interconnect module capable of transferring information between the target module and other modules.

5. The method of any of claims 1 - 4, comprising allowing the target module communication with the control module in idle mode and limiting communication with other modules when the target module is in idle mode.

6. The method of any of claims 1 - 5, wherein the target module activates the third signal asynchronously to a clock signal, the clock signal capable of synchronizing communication between the target module and one or more other modules.

7. An apparatus, comprising:
a control module;
at least one target module coupled to the control module, wherein the control module is capable of transmitting a first signal to the target module; and
wherein the at least one target module is capable of transmitting a second signal and a third signal to the control module.

8. The apparatus of claim 7, comprising:
an initiator module coupled to the control module, wherein the control module is capable of controlling power and at least one clock signal to the initiator module;
an interconnect module coupled between the initiator module and the at least one target module, said interconnect module further coupled to the control module; and
wherein the control module is capable of controlling power and at least one clock signal to the interconnect module.

9. The apparatus of claim 8, wherein the control module is capable of limiting power or the at least one clock signal transmitted to the interconnect module if the at least one target module enters idle mode.

10. The apparatus of claim 8 or 9, comprising:
a memory device coupled to the interconnect module and the control module;
wherein the initiator module is a processor, said processor capable of entering a power saving state; and
a modem coupled to the at least one target module, wherein the at least one target module is a universal asynchronous receiver/transmitter.

11. An apparatus, comprising:
an initiator module;
a target module coupled to the initiator module, comprising:
a processing logic unit;
a system interface unit coupled to the processing logic unit and the initiator module; and
an idle interface unit (IIU) coupled to the system interface unit and the processing logic unit, wherein the IIU is capable of determining if the target module may enter and exit an idle mode, a forced idle mode, or a no idle mode.

12. The apparatus of claim 11, comprising an external device coupled to the target module, wherein the target module further comprises:
an external interface unit coupled to the processing logic unit and the external device; and
the IIU coupled to the external interface unit and the processing logic unit, wherein the IIU is capable of activating a wakeup signal.

13. The apparatus of claim 11 or 12, wherein the target module further comprises:
a plurality of clock domains; and
an event generator coupled between the processing logic unit and the system interface unit, said event generator capable of communicating information between the plurality of clock domains.
